# EUROPÄISCHE PATENTANMELDUNG

(11) **EP 4 480 681 A1**
(43) Veröffentlichungstag der Anmeldung: **25.12.2024**
(21) Anmeldenummer: 23181012.8
(22) Anmeldetag: 22.06.2023
(51) Int. Cl.: B29C 65/18, B29C 65/22, B29C 65/30, B29C 65/00

(54) **SIEGELWERKZEUG ZUM SIEGELN VON KUNSTSTOFFFOLIEN**

(71) Anmelder: ROPEX Industrie-Elektronik GmbH, 74321 Bietigheim-Bissingen (DE)
(72) Erfinder: SCHULLER, Manuel, 74321 Bietigheim-Bissingen (DE); PETERS, Frank, 74321 Bietigheim-Bissingen (DE)
(74) Vertreter: Patentanwälte Magenbauer & Kollegen Partnerschaft mbB

(57) **Zusammenfassung**

Die Erfindung betrifft ein Siegelwerkzeug (2) zum Siegeln von Kunststofffolien (9), mit einem Siegelband (21) aus einem elektrisch leitenden Werkstoff, wobei eine Breite (26) des Siegelbands (21) 2mm bis 1000mm beträgt, eine Länge (25) des Siegelbands (21) 2mm bis 21000mm beträgt und eine Dicke (27) des Siegelbands (21) 01mm bis 4mm beträgt und wobei eine größte Oberfläche (22, 23) des Siegelbands (21) von einer Vielzahl von Ausnehmungen (52) durchsetzt ist, wobei eine Summe von Querschnittsflächen der Ausnehmungen (52) in einer parallel zur größten Oberfläche (22, 23) ausgerichteten Querschnittsebene maximal 50 Prozent eines Flächeninhalts der größten Oberfläche (22, 23) beträgt.

## Beschreibung

Die Erfindung betrifft ein Siegelwerkzeug zum Siegeln von Kunststofffolien.

Aus der US 4 010 063 A ist das Grundprinzip eines derartigen Siegelwerkzeugs bekannt.

Die Aufgabe der Erfindung besteht darin, ein Siegelwerkzeug bereitzustellen, mit dem dünnwandige Kunststofffolien gesiegelt werden können.

Diese Aufgabe wird für ein Siegelwerkzeug der eingangs genannten Art dadurch gelöst, dass das Siegelwerkzeug ein Siegelband aus einem elektrisch leitenden Werkstoff umfasst, wobei eine Breite des Siegelbands 2mm bis 1000mm beträgt, eine Länge des Siegelbands 2mm bis 2000mm beträgt und eine Dicke des Siegelbands 0,1mm bis 4mm beträgt und wobei eine größte Oberfläche des Siegelbands von einer Vielzahl von Ausnehmungen durchsetzt ist, wobei eine Summe von Querschnittsflächen der Ausnehmungen in einer parallel zur größten Oberfläche ausgerichteten Querschnittsebene maximal 50 Prozent eines Flächeninhalts der größten Oberfläche beträgt.

Ein bekanntes Siegelband ist streifenförmig ausgebildet und weist eine Länge auf, die erheblich größer als eine Breite ist. Ferner ist eine Dicke des Siegelband um ein Vielfaches kleiner als die Länge des Siegelband. Hierdurch kann eine Flexibilität des Siegelbands in einer Siegelfläche, insbesondere eine Siegelebene, die durch eine größte Oberfläche des Siegelbands bestimmt wird, derart gewählt werden, dass zumindest geringfügige Dickenabweichungen bei den zu siegelnden Kunststofffolien durch das Siegelband und eine eventuell vorgesehene flexible Abstützung des Siegelbands ausgeglichen werden können. Vereinfachend kann eine Geometrie des Siegelbands insbesondere durch einen Quader beschrieben werden, wobei Varianten von Siegelbändern auch in wenigstens einer Ebene, insbesondere in eine Siegelebene, einen gekrümmten Verlauf aufweisen können.

Mit einem Siegelband, dessen Breite wenigstens 5 Prozent einer Länge des Siegelbands beträgt, können auch dünnwandige Kunststofffolien miteinander verschweißt werden, ohne dass bereits bei einer Einleitung von geringen Zugkräften auf das aus den verschweißten Kunststofffolien gebildeten Produkt, bei dem sich beispielsweise um einen Schlauchbeutel handeln kann, eine Beschädigung der Siegelnaht auftritt. Vielmehr wird durch die erfindungsgemäße Geometrie des Siegelbands eine breite Siegelnaht gebildet, bei der eine vorteilhafte Verteilung von Zugkräften auch für dünnwandige Kunststofffolien gewährleistet ist. Um eine möglichst gleichmäßige Wärmeverteilung in einem derart breiten Siegelband gewährleisten zu können und eine energieeffiziente Betriebsweise für das Siegelband zu erzielen, sind in einer größten Oberfläche des Siegelbands, die die Kontaktfläche mit der Kunststofffolie und damit die Siegelfläche bzw. Siegelebene bestimmt, eine Vielzahl von Ausnehmungen eingebracht. Diese Ausnehmungen erstrecken sich von einer der Kunststofffolie zugewandten größten Oberfläche des Siegelbands durch das Siegelband hindurch bis zu einer der Kunststofffolie abgewandten größten Oberfläche des Siegelbands. Rein exemplarisch werden die Ausnehmungen bei der Herstellung des Siegelbands durch ein geeignetes Trennverfahren, insbesondere aus der Gruppe: Laserschneiden, Wasserstrahlschneiden, Stanzen, aus dem Siegelband herausgeschnitten. Alternativ kann das Siegelband durch einen fotochemischen Prozess, insbesondere in Ätztechnik, oder durch einen galvanischen Aufbauprozess hergestellt werden.

Um eine vorteilhafte Funktion für das Siegelband zu gewährleisten ist es vorgesehen, dass eine Summe von Querschnittsflächen der Ausnehmungen in einer parallel zur größten Oberfläche ausgerichteten Querschnittsebene maximal 30 Prozent eines Flächeninhalts der größten Oberfläche beträgt. Für ein quaderförmig ausgebildetes Siegelband ergibt sich ein Flächeninhalt der größten Oberfläche durch das Produkt aus Länge und Breite. Die Summe der Querschnittsflächen der Ausnehmungen kann bei einem quaderförmig ausgebildeten Siegelband unmittelbar für die größte Oberfläche ermittelt werden, bei gekrümmten größten Oberflächen oder dreidimensional geformten größten Oberflächen bietet sich für die Ermittlung der Summe der Querschnittflächen eine Projektion der Ausnehmungen in eine Querschnittsebene an. Bevorzugt ist vorgesehen, dass die Summe der Querschnittsflächen der Ausnehmungen wenigstens 10 Prozent, besonders bevorzugt wenigstens 20 Prozent, des Flächeninhalt der größten Oberfläche des Siegelbands beträgt.

Die Ausnehmungen können voneinander unterschiedliche Geometrie und damit auch unterschiedliche Flächeninhalte aufweisen. Bevorzugt ist vorgesehen, dass die Ausnehmungen gleichartig profiliert und gleichartig ausgerichtet sind.

Vorteilhafte Weiterbildungen der Erfindung sind Gegenstand der Unteransprüche.

Zweckmäßig ist es, wenn eine Querschnittsfläche einer größten Ausnehmung maximal ein Fünffaches einer mittleren Querschnittsfläche der Ausnehmungen beträgt. Hierbei wird davon ausgegangen, dass eine mittlere Querschnittsfläche der Ausnehmungen dadurch bestimmt wird, dass die Querschnittsflächen aller Ausnehmungen addiert und durch die Anzahl der Ausnehmungen geteilt wird. Die Querschnittsfläche der größten Ausnehmung soll dementsprechend derart gewählt sein, dass sie maximal das Fünffache der hierdurch ermittelten mittleren Querschnittsfläche beträgt. Hierdurch wird gewährleistet, dass das Siegelband nicht mit Ausnehmungen versehen ist, die zu großen Flächen in der Siegelnaht führen, in denen kein Wärmeeintrag und damit auch keine Siegelung erfolgt.

Vorteilhaft ist es, wenn längste Erstreckungsachsen von wenigstens 50 Prozent der Ausnehmungen in einem Winkelintervall von 70 bis 110 Grad zu einer längsten Kante oder zu einem der jeweiligen Ausnehmung unmittelbar benachbarten Abschnitt der längsten Kante des Siegelbands ausgerichtet sind. Prinzipiell können die Ausnehmungen in der größten Oberfläche des Siegelbands unterschiedlichste Geometrien aufweisen, beispielsweise kreisförmig, oval, quadratisch oder rechteckig. Bevorzugt ist vorgesehen, dass die Ausnehmungen eine größte Erstreckung in einer parallel zur größten Oberfläche ausgerichteten Raumrichtung aufweisen, wobei diese größte Erstreckung eine Erstreckungsachse bestimmt. Diese Erstreckungsachse ist für den Fall eines kubisch ausgebildetes Siegelbands bezogen auf eine längste Kante der großen Oberfläche des Siegelbands in einem Winkelintervall von 70 bis 110 Grad zu dieser längsten Kante ausgerichtet. Für den Fall eines bereichsweise gekrümmten Siegelbands ist vorgesehen, dass die Erstreckungsachse in dem Winkelintervall von 70 bis 110 Grad zu einem Abschnitt der längsten Kante des Siegelbands ausgerichtet ist, der den geringsten Abstand zur Ausnehmung aufweist.

Bei einer Weiterbildung der Erfindung ist vorgesehen, dass die längsten Erstreckungsachsen der Ausnehmungen parallel zueinander sowie quer zur längsten Kante des Siegelbands ausgerichtet sind. Hierbei wird davon ausgegangen, dass die größte Oberfläche des Siegelbands rechteckig ausgebildet ist.

Bei einer Ausgestaltung der Erfindung ist vorgesehen, dass die Ausnehmungen in einer Längsrichtung des Siegelbands und/oder in einer Querrichtung des Siegelbands in gleicher Teilung angeordnet sind. Durch eine derartige regelmäßige Anordnung der Ausnehmungen kann ein vorteilhaftes, für sämtliche Abschnitte des Siegelbands einheitliches Deformationsverhalten für das Siegelband bewirkt werden. Dies gilt insbesondere dann, wenn die Ausnehmungen alle die gleiche Geometrie aufweisen. Hierdurch kann erreicht werden, dass Abstände zwischen den Ausnehmungen sowohl in Längsrichtung des Siegelbands als auch in Querrichtung des Siegelbands jeweils identisch sind.

Bevorzugt ist vorgesehen, dass die Ausnehmungen schlitzförmig mit einer Quererstreckung ausgebildet sind, die mindestens das Doppelte einer Längserstreckung beträgt. Bevorzugt ist vorgesehen, dass die Ausnehmungen eine rechteckige Querschnittsfläche aufweisen, wobei zusätzlich vorgesehen sein kann, dass die Ecken der Querschnittsfläche abgerundet ausgebildet sind. Die Quererstreckung ist diejenige Erstreckung, die parallel zur Breite des, vorzugsweise rechteckig ausgebildeten, Siegelbands ausgerichtet ist. Die Längserstreckung ist diejenige Erstreckung, die parallel zur längsten Kante und damit auch parallel zur Länge des, vorzugsweise rechteckig ausgebildeten, Siegelbands ausgerichtet ist.

Alternativ wird die Aufgabe der Erfindung für ein Siegelwerkzeug der eingangs genannten Art dadurch gelöst, dass das Siegelband aus einem elektrisch leitenden Werkstoff hergestellt ist, das an einem ersten Endbereich einen ersten Kontaktbereich zur elektrischen Kontaktierung mit einer ersten Elektrode und an einem zweiten Endbereich einen zweiten Kontaktbereich zur elektrischen Kontaktierung mit einer zweiten Elektrode aufweist und dass in einem Heizbereich, der zwischen dem ersten Kontaktbereich und dem zweiten Kontaktbereich ausgebildet ist, mit wenigstens einer Ausnehmung aus der Gruppe: Durchgangsbohrung, Ausklinkung, Mäanderschnitt, versehen ist, so dass ein Abstand zwischen dem ersten Kontaktbereich und dem zweiten Kontaktbereich kleiner als eine Länge eines elektrischen Pfads zwischen dem ersten Kontaktbereich und dem zweiten Kontaktbereich ist. Der Abstand zwischen dem ersten Kontaktbereich und dem zweiten Kontaktbereich ist diejenige kürzeste Gerade, die sich zwischen dem ersten Kontaktbereich und dem zweiten Kontaktbereich erstreckt. Die Länge dieser Gerade ist kleiner als die Länge des elektrischen Pfades, den die Elektronen nehmen müssen, um bei einem Stromfluss durch das Siegelband von dem ersten Kontaktbereich zum zweiten Kontaktbereich zu gelangen. Hierbei spielt die Anzahl, Geometrie und Anordnung von Ausnehmungen, die in den Heizbereich eingebracht sind, eine entscheidende Rolle, da mit diesen Ausnehmungen der Weg der Elektronen und damit die Länge des elektrischen Pfades bestimmt wird. Eine Durchgangsbohrung im Heizbereich ist eine Ausnehmung, die vollständig vom Material des Siegelbands berandet ist. Eine Ausklinkung des Heizbereichs ist ein Einschnitt in das Siegelband, der von einem Randbereich des Siegelbands ausgehend erstreckt ist und der nicht vollständig vom Material des Siegelbands umgeben ist. Ein Mäanderschnitt wird durch eine linienförmige Ausnehmung gebildet, die wahlweise vollständig oder nicht vollständig vom Material des Siegelbands umgeben ist und die in ihrem Verlauf wenigstens einen Knick und/oder wenigstens eine Krümmung aufweist, so dass ein erster Abschnitt der Ausnehmung vor dem Knick oder der Krümmung und ein zweiter Abschnitt der Ausnehmung nach dem Knick oder der Krümmung einen Winkel von wenigstens 90 Grad, vorzugsweise von wenigstens 120 Grad, besonders bevorzugt von wenigstens 150 Grad und insbesondere von wenigstens 180 Grad bestimmen. Besonders vorteilhaft ist es, wenn der Mäanderschnitt mehrere Knicke und/oder Krümmungen aufweist, wobei aufeinander folgende Knicke oder Krümmungen jeweils gegensinnig ausgebildet sind.

Bevorzugt ist vorgesehen, dass längs des Abstands zwischen dem ersten Kontaktbereich und dem zweiten Kontaktbereich ein erster Heizbereichabschnitt und ein daran angrenzender zweiter Heizbereichabschnitt vorgesehen sind, wobei der erste Heizbereichabschnitt einen ersten elektrischen Widerstand aufweist und wobei der zweite Heizbereichabschnitt einen zweiten elektrischen Widerstand aufweist, der gleich oder größer als der erste elektrische Widerstand ist. Hierdurch kann erreicht werden, dass bei einem Stromfluss durch das Siegelband der zweite Heizbereichabschnitt aufgrund seines größeren elektrischen Widerstands eine höhere Temperatur aufweist als der erste Heizbereichabschnitt. Dies ist insbesondere dann der Fall, wenn eine Längenerstreckung des ersten und des zweiten Heizbereichabschnitts längs des Abstands zwischen dem ersten Kontaktbereich und dem zweiten Kontaktbereich gleich sind.

Bei einer Weiterbildung der Erfindung ist vorgesehen, dass der erste Heizbereichabschnitt eine erste Anordnung von Ausnehmungen aufweist, die einen ersten elektrischen Widerstand bestimmen und wobei der zweite Heizbereichabschnitt eine zweite Anordnung von Ausnehmungen aufweist, die einen zweiten elektrischen Widerstand bestimmen, der gleich oder größer als der erste elektrische Widerstand ist. Zur Ermittlung des Widerstands wird der ohmsche Widerstand des jeweiligen Heizbereichabschnitts zugrundegelegt und auf die Erstreckung des jeweiligen Heizbereichsabschnitts längs des Abstands zwischen dem ersten Kontaktbereich und dem zweiten Kontaktbereich bezogen, so dass damit ein elektrischer Widerstand pro Längeneinheit beschrieben wird.

In weiterer Ausgestaltung der Erfindung ist vorgesehen, dass der erste Heizbereichabschnitt in einer quer zum Abstand zwischen dem ersten Kontaktbereich und dem zweiten Kontaktbereich ausgerichteten Querschnittsebene einen ersten gemittelten Querschnitt aufweist und dass der zweite Heizbereichabschnitt in der Querschnittsebene einen zweiten gemittelten Querschnitt aufweist, der gleich oder kleiner als der erste gemittelte Querschnitt ist. Hierbei wird der gemittelte Querschnitt für den jeweiligen Heizbereichabschnitt als Summe aller längs des Abstands zwischen dem ersten Kontaktbereich und dem zweiten Kontaktbereich, insbesondere in gleicher Abstandsteilung ermittelten Einzelquerschnitte des jeweiligen Heizbereichabschnitts gebildet und dann auf die Längenerstreckung des Heibereichabschnitts bezogen. Die Unterschiede zwischen den gemittelten Querschnitten der jeweiligen Heizbereichabschnitte können auf unterschiedliche Breitenerstreckungen der jeweiligen Heizbereichabschnitte in einer Raumrichtung quer zum Abstand und/oder auf eine unterschiedliche Anzahl und Größe von Ausnehmungen im jeweiligen Heizbereichabschnitt zurückgeführt werden.

Zweckmäßig ist es, wenn das Siegelband aus einem metallischen Werkstoff, insbesondere aus einem Edelstahlmaterial, hergestellt ist. Hiermit lassen sich die Anforderungen an das Siegelband im Hinblick auf Temperaturfestigkeit und elektrische Leitfähigkeit sowie mechanische Widerstandsfähigkeit in günstiger Weise erfüllen. Dies gilt insbesondere dann, wenn das Siegelband aus einem Edelstahlmaterial hergestellt ist.

In weiterer Ausgestaltung der Erfindung ist vorgesehen, dass dem Siegelband ein gestaltfester Stützkörper, insbesondere eine quaderförmige Stützleiste, zugeordnet ist, der eine Stützfläche aufweist, wobei eine der beiden größten Oberflächen des Siegelbands an der Stützfläche anliegt. Beispielhaft ist vorgesehen, dass der Stützkörper als Stützleiste, beispielsweise aus einem metallischen Material wie Aluminium oder Stahl, hergestellt ist und zur Einspannung in eine Schweißvorrichtung vorgesehen ist. Die Aufgabe des Stützkörpers besteht darin, die für die Durchführung des Siegelvorgangs notwendigen Kräfte, die von der Schweißvorrichtung beispielsweise mittels eines entsprechenden Aktors bereitgestellt werden, möglichst gleichmäßig auf das Siegelband einzuleiten, um eine homogene Schweißnaht für die miteinander zu verbindenden Kunststofffolien zu erzielen. Rein exemplarisch ist die Stützleiste quaderförmig ausgebildet und weist eine Länge auf, die zumindest im Wesentlichen der Länge des Siegelbands entspricht. Eine Breite des Stützkörpers ist gleich oder größer als eine Breite des Siegelbands gewählt. Eine Höhe bzw. Dicke des Stützkörpers ist typischerweise gleich oder größer als die Breite des Stützkörpers.

Vorteilhaft ist es, wenn zwischen der Stützfläche und dem Siegelband eine gummielastische und/oder elektrisch isolierende Zwischenlage angeordnet ist. Die Zwischenlage, die beispielsweise aus einem gummielastischen Silikonmaterial hergestellt sein kann, dient zum Ausgleich von geringfügigen Unebenheiten, die die miteinander zu verschweißenden Kunststofffolien aufweisen können. Ferner gewährleistet die Zwischenlage bei geeigneter Materialauswahl, insbesondere bei Nutzung von Silikon, eine elektrische Isolation zwischen dem Siegelband und der Stützleiste. Bevorzugt ist vorgesehen, dass die Zwischenlage die am Stützkörper ausgebildete und zur Anlage des Siegelbands dienende Stützfläche zumindest nahezu vollständig bedeckt.

Bei einer Weiterbildung der Erfindung ist vorgesehen, dass die größte Oberfläche des Siegelbands, die der Stützleiste abgewandt ist, von einer temperaturfesten Trennfolie überdeckt ist und/oder dass der Stützkörper von wenigstens einem, insbesondere parallel zur Stützfläche ausgerichteten, Kühlkanal durchsetzt ist. Mit der temperaturfesten Trennfolie, bei der sich beispielsweise um eine glasfaserverstärkte und mit PTFE (Polytetrafluorethylen) beschichtete Folie handeln kann, wird ein unerwünschtes Anhaften der zu verschweißenden Kunststofffolie am Siegelband vermieden. Ferner dient die temperaturfeste Trennfolie auch zur Verschleißminderung für das Siegelband und/oder zu einem Temperaturausgleich innerhalb der vom Siegelband bestimmten Siegelfläche und/oder zur Vereinheitlichung der auf die Kunststofffolie einwirkenden Flächenpressung.

Vorteilhafte Ausführungsformen der Erfindung sind der Zeichnung dargestellt. Hierbei zeigt:
- Figur 1: eine Siegelvorrichtung mit einem Siegelwerkzeug, das einen Stützkörper und ein Siegelband umfasst, sowie einen gegenüberliegend zum Siegelwerkzeug angeordnetes Gegenwerkzeug,
- Figur 2: eine Draufsicht auf eine erste Ausführungsform eines Siegelbands,
- Figur 3: eine Schnittdarstellung für das Siegelband gemäß der Figur 2,
- Figur 4: eine zweite Ausführungsform eines Siegelbands, das im Wesentlichen eine rechteckige Gestalt aufweist, und
- Figur 5: eine dritte Ausführungsform eines Siegelbands, das im Wesentlichen eine rechteckige Gestalt aufweist.

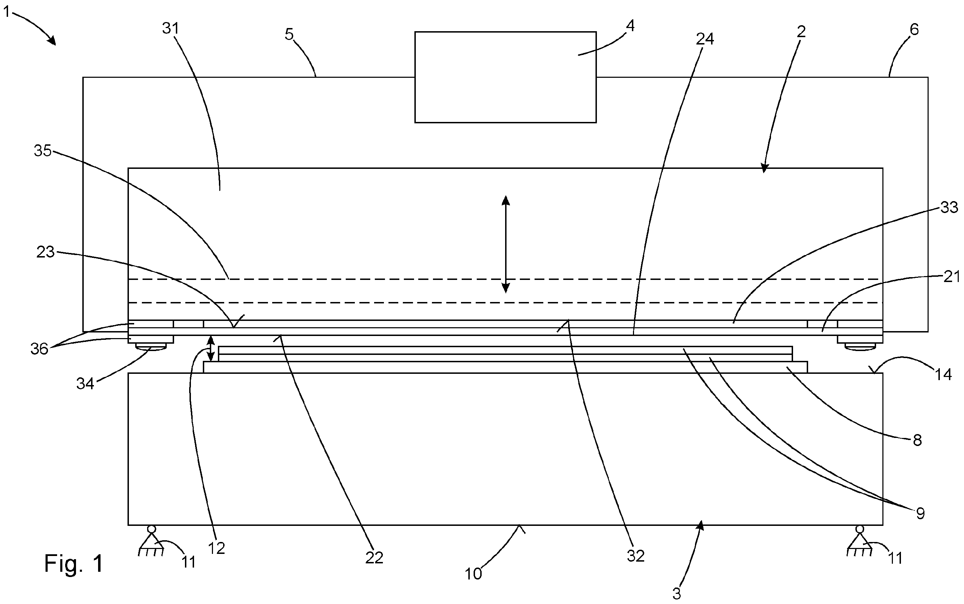

Eine in der Figur 1 nur schematisch gezeigte Siegelvorrichtung 1 umfasst ein Siegelwerkzeug 2 sowie einen gegenüberliegend zum Siegelwerkzeug 2 angeordnetes Gegenwerkzeug 3. Dem Siegelwerkzeug 2 ist eine Stromquelle 4 zugeordnet, die über eine Zuleitung 5 und eine Ableitung 6 elektrisch mit einem dem Siegelwerkzeug 2 zugehörigen Siegelband 21 verbunden ist. Rein exemplarisch ist vorgesehen, dass das Gegenwerkzeug 3 ortsfest an einem nicht dargestellten Maschinenrahmen festgelegt ist, was durch die an einer Unterseite 10 des Gegenwerkzeug 3 angeordneten Lagerelemente 11 symbolisiert ist. Ferner ist vorgesehen, dass das Siegelwerkzeug 2 linearbeweglich am nicht dargestellten Maschinenrahmen aufgenommen ist und dass dem Siegelwerkzeug 2 ein am Maschinenrahmen abgestützter, nicht dargestellter Aktor zugeordnet ist, mit dem eine Vertikalbewegung des Siegelwerkzeugs 2 gegenüber dem Gegenwerkzeug 3 bewirkt werden kann. Bei einer solchen Vertikalbewegung des Siegelwerkzeugs 2 verändert sich ein Abstand zwischen dem Siegelwerkzeug 2 und dem Gegenwerkzeug 3, wobei dieser Abstand auch als Arbeitsspalt 12 bezeichnet wird, in den rein exemplarisch zwei parallel zueinander ausgerichtete Kunststofffolien 9 eingelegt werden können, die mit der Siegelvorrichtung 1 verschweißt werden sollen.

Beispielhaft umfasst das Siegelwerkzeug 2 einen quaderförmig ausgebildeten Stützkörper 31, der eine rein exemplarisch eben ausgebildete und dem Gegenwerkzeug 3 zugewandte Stützfläche 32 aufweist. Die Stützfläche 32 trägt eine Zwischenlage 33, die rein exemplarisch als Folienschicht mit konstanter Dicke aus einem gummielastischen Silikonmaterial hergestellt ist und die Stützfläche 32 bereichsweise bedeckt. Ferner kann vorgesehen sein, dass der Stützkörper 31 von einem vorzugsweise parallel zur Stützfläche 32 ausgerichteten, nur gestrichelt eingezeichneten Kühlkanal 35 durchsetzt ist.

Am Gegenwerkzeug 3, das rein exemplarisch quaderförmig ausgebildet ist, ist an einer Oberseite 14 ein plattenförmig ausgebildetes Druckpolster 8 angeordnet, das in gleicher Weise wie die Zwischenlage 33 aus einem gummielastischen Silikonmaterial hergestellt sein kann. Auf das Druckpolster 8 werden die Kunststofffolien 9 zur Durchführung des Siegelvorgangs aufgelegt und werden durch eine vertikale Annäherungsbewegung des Siegelwerkzeugs 2 unter Verkleinerung des Arbeitsspeichers 12 gleichmäßig mit einer Druckkraft beaufschlagt, die vom nicht dargestellten Aktor auf das Siegelwerkzeug 2 eingeleitet wird. Ferner wird von der Stromquelle 4 über die Zuleitung 5 und die Ableitung 6 ein elektrischer Strom durch das Siegelband 21 geleitet, wodurch es zu einer Erwärmung des Siegelbands 21 und der Kunststofffolien 9 kommt, womit der gewünschte Siegelvorgang bewirkt wird.

Das Siegelband 21 erstreckt sich gemäß der Darstellung der Figur 1 mit seiner längsten Kante 24 in horizontaler Richtung und ist jeweils endseitig an Siegelband-Haltern 34 festgelegt, die ihrerseits an dem Stützkörper 31 befestigt sind. Beispielsweise sind die Siegelband-Halter 34 in den Stützkörper 31 eingeschraubt und mit Isolierscheiben 36 versehen, um eine elektrisch isolierte Aufnahme des Siegelbands 21 gegenüber dem Stützkörper 31 zu gewährleisten.

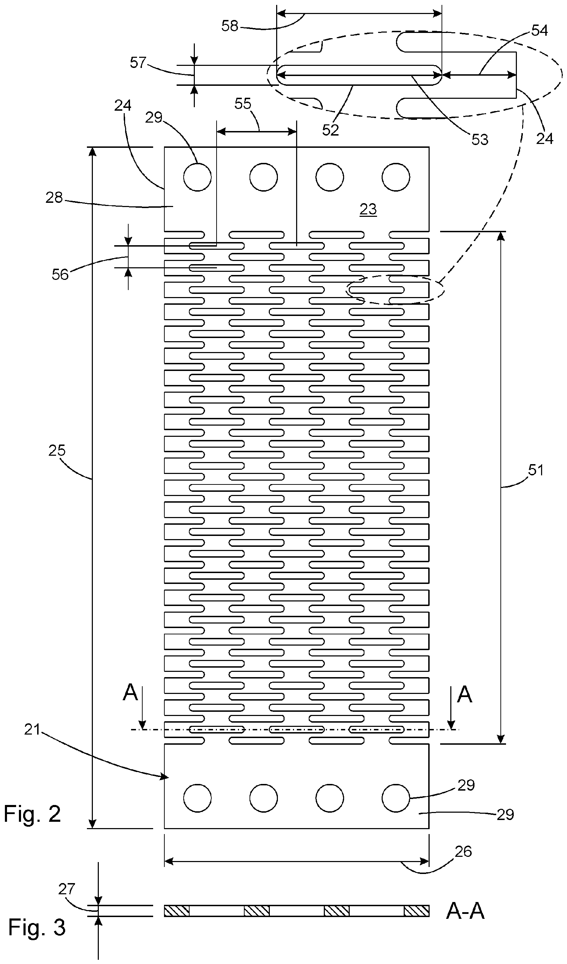

Wie aus der Darstellung der Figur 2 entnommen werden kann, die eine Draufsicht auf das rein exemplarisch rechteckige Siegelband 21 gemäß der Figur 1 zeigt, beträgt eine Länge 25 der längsten Kante 24 ca. das 2,5-fache einer Breite 26. An einander entgegengesetzten Endbereichen 28 ist das Siegelband 21 mit jeweils vier Bohrungen 29 versehen, die bei der Montage des Siegelbands 21 an den Stützkörper 31 von den beispielsweise als Schrauben ausgebildeten Siegelband-Haltern 34 durchsetzt werden.

Ferner sind die einander entgegengesetzt ausgerichteten größten Oberflächen 22, 23 des Siegelbands 21 in einem Mittenabschnitt 51 von einer Vielzahl von Ausnehmungen 52 durchsetzt. Beispielhaft sind die Ausnehmungen 52 in Richtung der Breite 26 des Siegelbands 21 in gleicher Breiten-Teilung 55 angeordnet. Ferner sind die Ausnehmungen 52 in Richtung der Länge 25 des Siegelbands 21 in gleicher Längen-Teilung 56 angeordnet. Darüber hinaus ist vorgesehen, dass die Ausnehmungen 52 bezüglich der Darstellung der Figur 2 zeilenweise angeordnet sind und in benachbart zueinander angeordneten Zeilen jeweils um die Hälfte ihrer Breiten-Teilung 55 versetzt angeordnet sind.

Die schlitzförmig ausgebildeten Ausnehmungen 52 weisen jeweils eine in der Detaildarstellung der Figur 2 gezeigte Erstreckungsachse 53 auf, die rein exemplarisch in einem rechten Winkel zur längsten Kante 24 des Siegelbands 21 ausgerichtet ist. Hierbei ist auch die Bedingung erfüllt, dass die Erstreckungsachse 53 quer zu einem Abschnitt der längsten Kante 24 ausgerichtet ist, der in minimalem Abstand 54 zur jeweiligen Ausnehmungen 52 angeordnet ist. Rein exemplarisch sind einige der Ausnehmungen 52 derart angeordnet, dass sie in der Art von Ausklinkungen die längste Kante 24 des Siegelbands 21 durchbrechen. Diese Anordnung der Ausnehmungen 52 ist nicht zwingend für die Gewährleistung der Funktion des Siegelbands 21 notwendig, erhöht aber die Elastizität des Siegelbands 21 in Richtung der längsten Kante 24. Beispielhaft beträgt eine Ausdehnung einer Quererstreckung 58 der Ausnehmung 52 ein Mehrfaches einer Ausdehnung einer Längserstreckung 57 der Ausnehmung 52.

Wie aus der Darstellung der Figur 3 entnommen werden kann, ist eine Dicke 27 des Siegelbands 21 erheblich kleiner als die Länge 25 und die Breite 26 und beträgt rein exemplarisch ca. 1,5 Prozent der Länge 25 des Siegelbands 21.

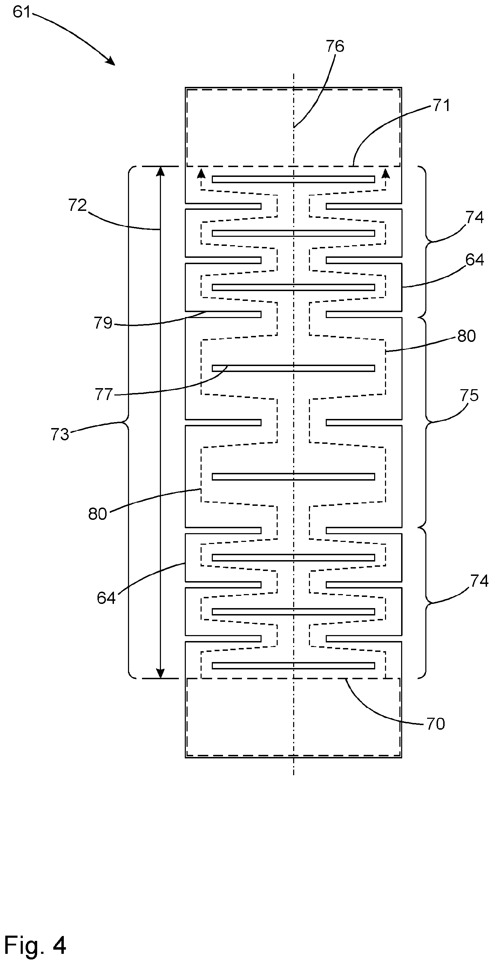

Das in der Figur 4 gezeigte Siegelband 61 weist eine im Wesentlichen rechteckige Gestalt auf und ist rein exemplarisch als Metallband aus einem Edelstahlmaterial hergestellt. Wie der rein schematischen Darstellung der Figur 4 entnommen werden kann, weist das Siegelband 61 an einander entgegengesetzten Endbereichen einen ersten Kontaktbereich 70 und einen zweiten Kontaktbereich 71 auf, die jeweils zur Verbindung mit nicht näher dargestellten Elektroden eines ebenfalls nicht näher gezeigten Siegelwerkzeugs vorgesehen sind. Zwischen den beiden Kontaktbereichen 70, 71, die in einem Abstand 72 zueinander angeordnet sind, erstreckt sich ein Heizbereich 73. Rein exemplarisch weist der Heizbereich 73 zwei unterschiedlich ausgebildete Heizbereichabschnitte 74, 75 auf. Wie der Darstellung der Figur 4 entnommen werden kann, grenzt der erste Heizbereichabschnitt 74 an den ersten Kontaktbereich 70 an und erstreckt sich bis zu dem zweiten Heizbereichabschnitt 75. Diese erstreckt sich bis zu einem weiteren Heizbereichabschnitt, der in gleicher Weise wie der erste Heizbereichabschnitt 74 ausgebildet ist und daher auch als weiterer erster Heizbereichabschnitt 74 bezeichnet wird.

Beispielhaft ist vorgesehen, dass der erste Heizbereichabschnitt 74 insgesamt drei jeweils symmetrisch zu einer parallel zum Abstand 72 ausgerichteten Mittelachse 76 angeordnete Querschlitze 77 aufweist, die sich ausgehend von der Mittelachse 76 in Richtung der jeweiligen längsten Kante 64 erstrecken, jedoch jeweils einen Abstand zur jeweiligen längsten Kante 64 einhalten. Rein exemplarisch sind die Querschlitze 77 längs der Mittelachse 76 in gleicher Teilung angeordnet. Ferner ist vorgesehen, dass jeweils auf einen Querschlitz 77 symmetrisch zur Mittelachse ausgerichtete und jeweils von der längsten Kante 64 ausgehende Ausklinkungen 79 ausgebildet sind, die sich jedoch nicht bis zur Mittelachse 76 erstrecken. Durch die Querschlitze 77 und die Ausklinkungen 79 wird erreicht, dass Elektronen, die am ersten Kontaktbereich 70 bereitgestellt werden und bis zum zweiten Kontaktbereich 71 gelangen sollen, eine Vielzahl von Umwegen nehmen müssen, sodass ein elektrischer Widerstand für den ersten Heizbereichabschnitt 74 erheblich größer als ein elektrischer Widerstand eines streifenförmigen Siegelbands, dass die gleiche Länge wie der erste Heizbereichabschnitt aufweist, ist.

An den ersten Heizbereichabschnitt 74 schließt sich längs der Mittelachse 76 der zweite Heizbereichabschnitt 75 an, der verglichen mit dem ersten Heizbereichabschnitt 74 eine geringere Anzahl von Querschlitzen 77 und Ausklinkungen 79 aufweist und daher einen geringeren elektrischen Widerstand als der erste Heizbereichabschnitt 74 aufweist. Geht man davon aus, dass der erste Heizbereichabschnitt 74 und der bei der Heizbereichabschnitt 75 in Richtung der Mittelachse 76 die gleiche Längenerstreckung aufweisen, ist somit der ohmsche Widerstand des ersten Heizbereichabschnitts 74 größer als der ohmsche Widerstand des zweiten Heizbereichabschnitts 75.

An den zweiten Heizbereichabschnitt 75 schließt sich ein weiterer davon unterschiedlicher Heizbereichabschnitt an, der in gleicher Weise wie der erste Heizbereichabschnitt 74 gestaltet ist.

Symbolisch sind in der Figur 4 zwei Strompfade 80 eingezeichneten, anhand derer dargestellt werden soll, sodass eine Länge der beiden Strompfade 80 bedeutend größer als der Abstand 72 ist. Durch die unterschiedliche Anzahl und Anordnung von Querschlitzen 77 und Ausklinkungen 79 wird somit erreicht, dass eine Stromdichte im Siegelband 61 im Bereich der beiden ersten Heizbereichabschnitte 74 maximal ist, wodurch dort auch eine größere Wärmeentwicklung stattfindet als im zweiten Heizbereichabschnitt 75, der aufgrund der geringeren Anzahl von Querschlitzen 77 und Ausklinkungen 79 eine geringere Stromdichte aufweist.

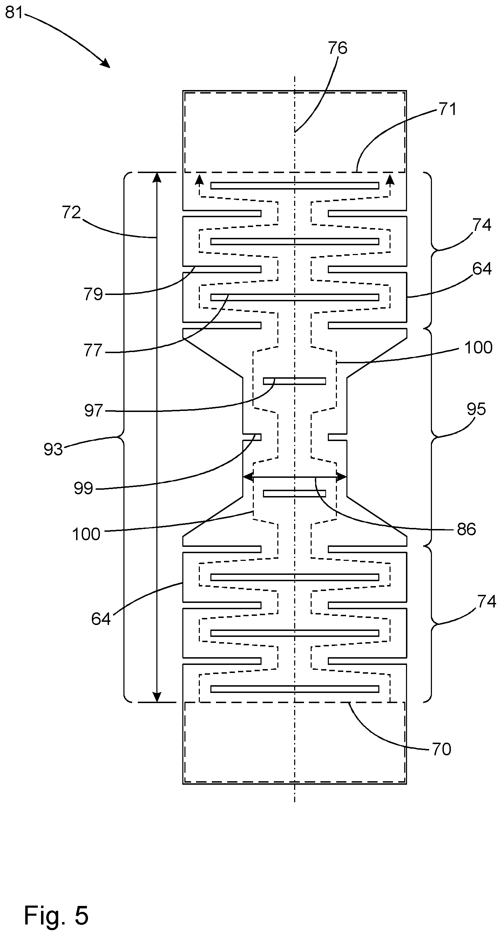

Die in der Figur 5 gezeigte dritte Ausführungsform eines Siegelbands 81 unterscheidet sich von der zweiten Ausführungsform des Siegelbands 61 durch die Ausgestaltung des zweiten Heizbereichabschnitts 95 des Heizbereichs 93, während die übrigen Bereiche des Siegelbands 81 in gleicher Weise wie beim Siegelband 61 ausgebildet sind, sodass hierfür auch die gleichen Bezugszeichen verwendet werden und auf eine neuerliche Beschreibung verzichtet wird.

Der zweite Heizbereichabschnitt 95 weist verglichen mit dem ersten Heizbereichabschnitt 74 eine geringere Breite 86 auf, wodurch mit dem Siegelband 81 beispielsweise eine kundenseitig vorgegebene Siegelnahtgeometrie verwirklicht werden kann. Trotz dieser geringeren Breite 86 des zweiten Heizbereichabschnitts 95 ist es erforderlich, den zweiten Heizbereichabschnitt 95 mit Querschlitzen 97 und Ausklinkungen 99 zu versehen, um eine Angleichung des für den Stromfluss effektiv zur Verfügung stehenden Querschnitts im zweiten Heizbereichabschnitt 95 an die für den Stromfluss effektiv zur Verfügung stehenden Querschnitte der beidseitig an den zweiten Heizbereichabschnitt 95 angrenzenden ersten Heizbereichabschnitte 74 zu erzielen.

Die in Figur 5 dargestellte Ausführungsform hat das somit Ziel, trotz der stark variierenden Geometrien der Heizbereichsabschnitte 74, 95 eine im Wesentlichen homogene Temperaturverteilung beim Betrieb des Siegelbands 81 gewährleistet.

## Patentansprüche

1. Siegelwerkzeug (2) zum Siegeln von Kunststofffolien (9), mit einem Siegelband (21) aus einem elektrisch leitenden Werkstoff, wobei eine Breite (26) des Siegelbands (21) 2mm bis 1000mm, eine Länge (25) des Siegelbands (21) 2mm bis 2000mm und eine Dicke (27) des Siegelbands 0,1mm bis 4mm beträgt und wobei eine größte Oberfläche (22, 23) des Siegelbands (21) von einer Vielzahl von Ausnehmungen (52) durchsetzt ist, wobei eine Summe von Querschnittsflächen der Ausnehmungen (52) in einer parallel zur größten Oberfläche (22, 23) ausgerichteten Querschnittsebene maximal 50 Prozent eines Flächeninhalts der größten Oberfläche (22, 23) beträgt.

2. Siegelwerkzeug (2) nach Anspruch 1, **dadurch gekennzeichnet, dass** eine Querschnittsfläche einer größten Ausnehmung (52) maximal ein Fünffaches einer mittleren Querschnittsfläche der Ausnehmungen (52) beträgt.

3. Siegelwerkzeug (2) nach Anspruch 1 oder 2, **dadurch gekennzeichnet, dass** längste Erstreckungsachsen (53) von wenigstens 50 Prozent der Ausnehmungen (52) in einem Winkelintervall von 70 bis 110 Grad zu einer längsten Kante (24) oder zu einem der jeweiligen Ausnehmung (52) unmittelbar benachbarten Abschnitt der längsten Kante (24) des Siegelbands (21) ausgerichtet sind.

4. Siegelwerkzeug (2) nach Anspruch 1, 2 oder 3, **dadurch gekennzeichnet, dass** die längsten Erstreckungsachsen (53) der Ausnehmungen (52) parallel zueinander sowie quer zur längsten Kante (24) des Siegelbands (21) ausgerichtet sind

5. Siegelwerkzeug (2) nach einem der vorhergehenden Ansprüche, **dadurch gekennzeichnet, dass** die Ausnehmungen (52) in einer Längsrichtung (25) des Siegelbands (21) und/oder in einer Querrichtung (26) des Siegelbands (21) in gleicher Teilung angeordnet sind.

6. Siegelwerkzeug (2) nach einem der vorhergehenden Ansprüche, **dadurch gekennzeichnet, dass** die Ausnehmungen (52) schlitzförmig mit einer Quererstreckung (58) ausgebildet sind, die mindestens das Doppelte einer Längserstreckung (57) beträgt.

7. Siegelwerkzeug (2) zum Siegeln von Kunststofffolien (9), mit einem Siegelband (61; 81) aus einem elektrisch leitenden Werkstoff, das an einem ersten Endbereich einen ersten Kontaktbereich (70) zur elektrischen Kontaktierung mit einer ersten Elektrode und an einem zweiten Endbereich einen zweiten Kontaktbereich (71) zur elektrischen Kontaktierung mit einer zweiten Elektrode aufweist und das in einem Heizbereich (73), der zwischen dem ersten Kontaktbereich (70) und dem zweiten Kontaktbereich (71) ausgebildet ist, mit wenigstens einer Ausnehmung (77, 79; 97, 99) aus der Gruppe: Durchgangsbohrung, Ausklinkung, Mäanderschnitt, versehen ist, so dass ein Abstand (72) zwischen dem ersten Kontaktbereich (70) und dem zweiten Kontaktbereich (71) kleiner als eine Länge eines elektrischen Pfads (80; 100) zwischen dem ersten Kontaktbereich (70) und dem zweiten Kontaktbereich (71) ist.

8. Siegelwerkzeug (2) nach Anspruch 7, **dadurch gekennzeichnet, dass** längs des Abstands (72) zwischen dem ersten Kontaktbereich (70) und dem zweiten Kontaktbereich (71) ein erster Heizbereichabschnitt (74) und ein daran angrenzender zweiter Heizbereichabschnitt (75; 95) vorgesehen sind, wobei der erste Heizbereichabschnitt (74) einen ersten elektrischen Widerstand aufweist und wobei der zweite Heizbereichabschnitt (75; 95) einen zweiten elektrischen Widerstand aufweist, der gleich oder größer als der erste elektrische Widerstand ist.

9. Siegelwerkzeug (2) nach Anspruch 8, **dadurch gekennzeichnet, dass** der erste Heizbereichabschnitt (74) eine erste Anordnung von Ausnehmungen (77, 79) aufweist, die einen ersten elektrischen Widerstand bestimmen und wobei der zweite Heizbereichabschnitt (75; 95) eine zweite Anordnung von Ausnehmungen (77, 79; 97, 99) aufweist, die einen zweiten elektrischen Widerstand bestimmen, der gleich oder größer als der erste elektrische Widerstand ist.

10. Siegelwerkzeug (2) nach Anspruch 7 oder 8, **dadurch gekennzeichnet, dass** der erste Heizbereichabschnitt (74) in einer quer zum Abstand zwischen dem ersten Kontaktbereich (70) und dem zweiten Kontaktbereich (71) ausgerichteten Querschnittsebene einen ersten gemittelten Querschnitt aufweist und dass der zweite Heizbereichabschnitt (95) in der Querschnittsebene einen zweiten gemittelten Querschnitt aufweist, der gleich oder kleiner als der erste gemittelte Querschnitt ist.

11. Siegelwerkzeug (2) nach einem der vorhergehenden Ansprüche, dass das Siegelband (21; 61; 81) aus einem metallischen Werkstoff, insbesondere aus einem Edelstahlmaterial, hergestellt ist.

12. Siegelwerkzeug (2) nach einem der vorhergehenden Ansprüche, **dadurch gekennzeichnet, dass** dem Siegelband (21; 61; 81) ein gestaltfester Stützkörper (31), insbesondere eine quaderförmige Stützleiste, zugeordnet ist, der eine Stützfläche (32) aufweist, wobei eine der beiden größten Oberflächen (22, 23) des Siegelbands (21; 61; 81) an der Stützfläche (32) anliegt.

13. Siegelwerkzeug (2) nach Anspruch 12, **dadurch gekennzeichnet, dass** zwischen der Stützfläche (32) und dem Siegelband (21; 61; 81) eine gummielastische und/oder elektrisch isolierende Zwischenlage (33) angeordnet ist.

14. Siegelwerkzeug (2) nach Anspruch 12 oder 13, **dadurch gekennzeichnet, dass** die größte Oberfläche (22) des Siegelbands (21; 61; 81), die dem Stützkörper (31) abgewandt ist, von einer temperaturfesten Trennfolie überdeckt ist und/oder dass der Stützkörper (31) von wenigstens einem, insbesondere parallel zur Stützfläche (32) ausgerichteten, Kühlkanal (35) durchsetzt ist.
